# NEUE EUROPÄISCHE PATENTSCHRIFT

(11) **EP 1 746 030 B2**
(45) Veröffentlichungstag und Bekanntmachung des Hinweises auf die Entscheidung über den Einspruch: **23.03.2016**
(45) Hinweis auf die Patenterteilung: 30.04.2008
(21) Anmeldenummer: 06010919.6
(22) Anmeldetag: 26.05.2006
(51) Int. Cl.: B65B 57/04, B65B 51/04, A22C 11/12

(54) **System aus einer Clipmaschine und einem Clipvorrat und Verfahren zum Betreiben einer solchen Clipmaschine**
System consisting of a clip coil and clip-magazine and process for using the same
Dispositif comportant une machine d'agraphage et une réserve d'agraphe et procedé de mise en oeuvre de la machine

(30) Priorität: 18.07.2005 DE 102005033437
(43) Veröffentlichungstag der Anmeldung: 24.01.2007
(73) Patentinhaber: Poly-clip System GmbH & Co. KG, 65795 Hattersheim (DE)
(72) Erfinder: Ebert, Detlef, 61231 Bad Nauheim (DE); Meyrahn, Joachim, Dr., 64390 Erzhausen (DE)
(74) Vertreter: Eisenführ Speiser

(56) Entgegenhaltungen:
- EP-A1- 0 549 806
- DE-C1- 10 131 807
- US-B1- 6 298 635

## Beschreibung

Die Erfindung betrifft ein System bestehend aus einer Clipmaschine und einem Clipvorrat sowie einem Verfahren zum Betreiben einer solchen Clipmaschine. Die Clipmaschine weist wenigstens ein wechselbares erstes Verschließwerkzeug auf, welches zum Verschließen von dem Clipvorrat zugeführter Clips um eine schlauch- oder beutelförmige Verpackungshülle relativ zu einem zweiten Verschließwerkzeug bewegbar ist.

Mit Clipmaschinen der genannten Art werden typischerweise mit flüssigem bis zähpastösem oder auch (teilweise) granularem Inhalt befüllte beutel- oder schlauchförmige Verpackungshüllen verschlossen. Zunächst wird bei diesem Vorgang das Füllgut in die Verpackungshülle eingebracht und - im Fall einer schlauchförmigen Verpackungshülle - danach mittels Verdrängerelementen in Portionen (Würste) abgeteilt. Die Verdrängerelemente schnüren dazu die Verpackungshülle in radialer Richtung ein und verdrängen das in dem Einschnürbereich befindliche Füllgut in axialer Richtung - bezogen auf die Schlauchachse. Im Einschnürbereich wird so ein Schlauchzopf gebildet. Auf dem gebildeten Schlauchzopf werden im nächsten Arbeitstakt ein oder im Falle einer Doppelclipanordnung zwei Verschlusselemente nebeneinander mittels der eingangs beschriebenen, gegeneinander bewegbaren Verschließwerkzeuge aufgebracht.

Die Verschließwerkzeuge umfassen paarweise jeweils einen Stempel und eine Matrize, zwischen welchen der Clip während des Verschließens bis zum Erreichen des minimalen Abstandes der Verschließwerkzeuge (Verschlussabstand) umgeformt wird. Nach dem Verschließen werden die Verschließwerkzeuge in ihrerAusgangs- oder Öffnungsstellung zurückbewegt.

An die Qualität eines solchen Verschlusses werden hohe Anforderungen gestellt. Einerseits darf er nicht so fest sein, dass die Verpackungshülle beim Verschließen beschädigt wird. Andererseits muss der Verschluss aber ausreichend dicht sein, so dass beispielsweise bei nachfolgender Behandlung der verschlossenen Wurst (Garen, Räuchern, etc.) diese nicht von der Verpackungshülle abrutscht. Wenn die Clipmaschine für eine Vielzahl von verschiedenen Wurstprodukten und Verpackungshüllen eingesetzt werden soll, kommen daher unterschiedliche Clips zum Einsatz, die sich sowohl in ihrer Festigkeit als auch in ihrer Größe (Schenkellänge und Materialstärke) unterscheiden. In der Regel ist daher meistens auch wenigstens eines der Verschließwerkzeuge wechselbar und es kommen jeweils auf die Größe des verwendeten Clips entsprechend abgestimmte Verschließwerkzeuge zum Einsatz, um eine genau definier-te Verformung des Clips beim Verschließen zu erreichen.

Daswechselbare Verschließwerkzeug ist in der Regel die Matrize, welche in eine (passgenaue) Matrizenhaltung einlegbar und in dieser fixierbar ist. Nachfolgend wird daher gleichbedeutend von dem ersten Verschließwerkzeug oder der Matrize gesprochen.

Die Austauschbarkeit des Verschließwerkzeugs birgt jedoch grundsätzlich die Gefahr, dass nach einem Wechsel des Clips entweder vergessen wird, dass das kompatible Verschließwerkzeug eingesetzt wird, oder versehentlich ein falsches Verschließwerkzeug gewählt wird.

Unterschiedliche Clips haben aufgrund unterschiedlicher Materialstärke auch verschiedene Klämmerhöhen im verschlossenen Zustand. Daher ist es notwendig, die Ruhelage wenigstens eines der Verschließwerkzeuge so einzustellen, dass deren Verschlussabstand auf die entsprechende Klammerhöhe angepasst ist. Dies geschieht in der Regel nach jedem Wechsel des Clips bzw. des wechselbaren Verschließwerkzeuge manuell.

Wird die entsprechende Einstellung nicht vorgenommen, kann diese Fehlmanipulation einerseits zur Folge haben, dass der eingestellte Verschlussabstand zu groß ist und der Verschluss somit nicht die erforderliche Festigkeit erreicht. Ist der eingestellte Verschlussabstand andererseits zu klein, wird der Clip zu eng um die Schlauchhülle verschlossen und die Schlauchhülle kann beschädigt werden und/oder es tritt ein erhöhter Verschleiß an den bewegten Teilen der Clipmaschine und den Verschließwerkzeugen auf und/oderdie Clipmaschine wird schwerwiegend beschädigt.

Der Erfindung liegt die Aufgabe zugrunde, eine Clipmaschine und ein Verfahren zum Betreiben einer Clipmaschine dahingehend zu verbessern, dass die Gefahr einer Fehlmanipulation vermindert und das Verschließen eines Clips um die Verpackungshülle prozesssicherer gestaltet wird.

Die Aufgabe wird durch ein System und ein Verfahren der eingangs genannten Art mit den Merkmalen des kennzeichnenden Teils des Anspruchs 1 bzw. des Anspruchs 7 gelöst. Die Aufgabe wird ferner durch eine Clipmaschine gemäß Anspruch 6 gelöst.

Weist die Clipmaschine eine erste Sensoreinrichtung, welche eingerichtet ist, die zugeführten Clips anhand einer Kennung, die den Clips zugeordnet ist, zu identifizieren und ein entsprechendes Clipinformationssignal auszugeben, eine zweite Sensoreinrichtung, welche eingerichtet ist, das erste Verschließwerkzeug anhand einerdiesemzugeordneten Kennung zu identifizieren und ein entsprechendes Verschließwerkzeuginformationssignal auszugeben, und eine Steuerung mit einem mit der ersten und der zweiten Sensoreinrichtung gekoppelten Signaleingang und einem-Auswertemittel auf, welches eingerichtet ist, das Clipinformationssignal und das Verschließwerkzeuginformationssignal auszuwerten und ein Kompatibilitätssignal auszugeben, können oben geschilderte Fehlmanipulationen weitestgehend ausgeschlossen werden. Dazu muss das Kompatibilitätssignal dem Bediener der Maschine zugänglich gemacht und/oder ein Betreibender Maschine in Abhängigkeit von dem Kompatibilitätssignal ermöglicht oder ausgeschlossen werden.

Vorzugsweise weist der Clipvorrat einen Spulenkörper mit einem darauf aufgewickelten Clipstrang und ein Vorratsetikett mit der Kennung des Vorrats zugeführter Clips auf und die erste Sensoreinrichtung weist in diesem Fall eine Leseeinheitfürdas Vorratsetikett auf.

Besonders bevorzugt weist das Vorratsetikett einen RFID-Abschnitt und die Leseeinheit der ersten Sensoreinrichtung weist Mittel zum Auslesen eines solchen RFID-Abschnitts auf. Ein RFID-Etikett ist sehr klein und kann daher nahezu überall an dem Clipvorrat und vorzugsweise an dem Spulenkörper angebracht werden. Ein weiterer Vorteil ist, das kontaktfreie Auslesen der Information. Die Verwendung von RFID-Etiketten ist beispielweise aus der Logistikbranche bekannt und wird dort zur Verfolgung des Warenverkehrs eingesetzt. Das RFID-Etikett erfüllt erfindungsgemäß eingesetzt daher gleich zwei Funktionen, nämlich die der Kennung des Clipvorrats einerseits und die der Warenkennzeichnung für den Transport oder die Lagerung andererseits.

In einer vorteilhaften Ausführungsform ist die Kennung des Clipvorrats anhand einer geometrischen Information der vom Clipvorrat zugeführten Clips selbst gegeben. In diesem Fall weist die erste Sensoreinrichtung ein entlang der Zuführung angeordnetes Abtastsystem auf, das eingerichtet ist, diese geometrische Information zu erfassen und eine entsprechende Abtastinformation auszugeben, und es ist eine mit dem Abtastsystem gekoppelte Vergleichseinrichtung vorgesehen, die eingerichtet ist, die Abtastinformation zu empfangen, mit einer Referenz zu vergleichen, und das Ergebnis des Vergleichs als Clipinformationssignal an die Auswerteeinrichtung auszugeben.

Die abgetastete geometrische Information kann beispielsweise die Größe, Kontur, Materialstärke oder dgl. eines von dem Clipvorrat an dem Abtastsystem vorbeigeführten Clipstrangs sein. Bei dem bekannten auf einer Spule aufgewickelten Vorratswickel aus einem wellenförmig geprägten Metallstrang (meist aus Aluminiumdraht), sind die Clips als an ihren Schenkelenden einstückig zusammenhängende Clips ausgebildet. Je nach Clipgröße fällt die Teilung des Clipstranges ("Wellenlänge") und/oder Schenkelhöhe der Clips ("Amplitude") unterschiedlich groß aus. Diese Unterschiede können mittels des erfindungsgemäßen Abtastsystems, beispielsweise in Form einer CCD-Kamera, einer Lichtschranke, einem akustischen Signalwandler oder einer sonstigen Längen- oder Abstandmesseinrichtung erfasst werden.

Gemäß einer vorteilhaften Ausführungsform erfasst die CCD-Kamera die zugeführten Clips optisch, bevorzugt aus einer Richtung, die signifikante Unterschiede zwischen verschiedenen Clips gut erkennen lässt, und gibt eine Bildinformation aus. Die Vergleichseinrichtung erhält diese Bildinformation und vergleicht sie mit einem Referenzbild und ordnet auf diese Weise der erfassten Bildinformation eine Clipgrößeninformation zu.

Im Fall eines Abtastsystems mit Lichtschranke, ist diese bevorzugt so angeordnet, dass der generierte Lichtstrahl durch den vorbeigeführten Clipstrang in einer durch die Materialstärke, Teilung und Vorschubgeschwindigkeit bestimmten Regelmäßigkeit unterbrochen wird, beispielsweise immer wenn ein Schenkel eines Clips vorbeigeführt wird. Auf diese Weise kann die Vergleichseinrichtung entweder unter Zuhilfenahme einer Taktinformation als Referenz die Breite der zugeführten Clips ermitteln oder das Unterbrechungsmuster wird von der Vergleichseinrichtung unmittelbar mit einem Referenzmuster verglichen.

Bevorzugt weist das erste Verschließwerkzeug ein Werkzeugetikett mit der Kennung des ersten Verschließwerkzeuges auf und die zweite Sensoreinrichtung weist eine Leseeinheitfür das Werkzeugetikett auf.

Auch das Werkzeugetikett kann einen RFID-Abschnitt aufweisen und die zweite Sensoreinrichtung entsprechende Mittel zum Auslesen des RFID-Etiketts aufweisen. Auch hier liegen die Vorteile eines RFID-Etiketts in der durch die geringe Größe bedingten leichten Anbringbarkeit und dem doppelten Nutzen.

Alternativ zu einem Werkzeugetikett kann das erste Verschließwerkzeug (Matrize) anhand seiner geometrischen Beschaffenheit (geometrische Kennung) identifiziert werden. Die Clipmaschine weist bei dieser vorteilhaften Ausführungsform eine Werkzeugaufnahme (Matrizenaufnahme) auf, die als zweite Sensoreinrichtung Mittel zum Abtasten der geometrischen Kennung und zum Ausgeben einer entsprechenden Abtastinformation umfasst. Dies kann unter Berührung durch Kontaktschalter oder dgl. realisiert sein. In einer bevorzugten Weiterbildung kann das Abtasten auch berührungsfrei erfolgen, wenn die zweite Sensoreinrichtung eine mit dem Mittel zum Abtasten gekoppelte Vergleichseinrichtung aufweist, die eingerichtet ist die Abtastinformation mit einer Referenz zu vergleichen und das Ergebnis des Vergleichs als Verschließwerkzeuginformationssignal an die Auswerteeinrichtung auszugeben. Die konkrete Ausgestaltung kann, wie im Fall der ersten Sensoreinrichtung, in Form einer CCD-Kamera, einer Lichtschranke, einem akustischen Signalwandler oder einer sonstigen Längen- oder Abstandmesseinrichtung verwirklicht sein.

In einer bevorzugten Ausführungsform weist die Clipmaschine eine mit der Steuerung gekoppelte Anzeigeeinrichtung auf, die eingerichtet ist, anhand des von der Steuerung ausgegebenen Kompatibilitätssignals ein optisches und/oder akustisches Signal auszugeben, wenn das erste Verschließwerkzeug und der Clipvorrat nicht kompatibel sind. Dies ermöglicht dem Bediener der Clipmaschine nach dem Bestücken derselben mit einem neuen Clipvorrat oder nach dem Wechsel des Verschließwerkzeugs zu erkennen, wenn ihm eine Fehlbedienung unterlaufen ist, und den Fehler zu beseitigen, bevor die Clipmaschine in Betrieb genommen wird.

In einer vorteilhaften Weiterbildung ist die Steuerung der Clipmaschine eingerichtet, anhand des Kompatibilitätssignals ein Steuersignal auszugeben, das die Verarbeitung der zugeführten Clips unterbindet, wenn das erste Verschließwerkzeug und der Clipvorrat nicht kompatibel sind, und das die Verarbeitung der zugeführten Clips freigibt, wenn das erste Verschließwerkzeug und der Vorrat zugeführter Clips kompatibel sind. Durch diese höhere Sicherheitseinrichtung wird dem Bediener nicht bloß angezeigt, wenn eine Fehlmanipulation vorliegt, sondern es wird darüber hinaus vorbeugend ein Inbetriebnehmen der Maschine verhindert, wenn keine Kompatibilität zwischen Verschließwerkzeug und Clip vorliegt.

Bei Clipmaschinen, die ein Einstellmittel zum Einstellen der Ruhelage eines Verschließwerkzeugs und somit des Verschlussabstands der Verschließwerkzeuge aufweisen, ist die Steuerung bevorzugt ferner eingerichtet, eine Soll-Ruhelage in Abhängigkeit von dem Clipinformationssignal und/oder dem Verschließwerkzeuginformationssignal zu bestimmen und zu signalisieren. Signalisieren schließt das Ausgeben eines den entsprechenden Sachverhalt anzeigenden Signals zur weiteren Verwendung ebenso wie das unmittelbare akustische oder optische Anzeigen ein. Dies ermöglicht in jedem Fall eine vereinfachte Handhabung der Clipmaschine, da die Information über die automatisch erkannte Clipgröße und/oder Größe des im Einsatz befindlichen Verschließwerkzeugs dazu genutzt werden kann, dem Bediener - beispielsweise nach einem Verschließwerkzeugwechsel - anzuzeigen, dass oder auch wie die Ruhelage zu verstellen ist. Beispielsweise kann mittels Piktogrammen (Pfeilen und dgl.), Zahlenwerten, Farben oder Tönen signalisiert werden, in welche Richtung die Ruhelage des Verschließwerkzeugs zu verstellen ist, bis der Sollwert erreicht ist.

Gemäß einer bevorzugten Weiterbildung weisen die Einstellmittel ferner einen Verstellantrieb und eine mit der Steuerung gekoppelte Positionsbestimmungseinrichtung auf, die eingerichtet ist, die Ist-Ruhelage des Verschließwerkzeugs zu ermitteln, wobei die Steuerung ferner eingerichtet ist, in Abhängigkeit von der Soll-Ruhelage und der Ist-Ruhelage einen Steuersignal an den Verstellantrieb auszugeben. Dies stellt einen höheren Automatisierungsgrad dar, bei dem der Bediener nach dem Einsetzen des Verschließwerkzeugs nichtmehrmanuell eingreifen muss, um das Verschließwerkzeug in die Soll-Ruhelage zu verfahren. Dadurch wird die Gefahrvon Fehlmanipulationen um ein Weiteres vermindert.

Die Steuerung weist in einer weiteren vorteilhaften Ausführungsform eine Schnittstelle zum Einlesen einer Produktinformation auf und ist eingerichtet, eine Übereinstimmung zwischen dem Clipinformationssignal und/oder dem Verschließwerkzeuginformationssignal einerseits und der eingelesenen Produktinformation andererseits zu verifizieren und ein Plausibilitätssignal anhand des Verifikationsergebnisses auszugeben. Auf diese Weise kann dem Bediener angezeigt werden, ob für das von ihm gewählte Produkt, welches er beispielsweise über eine Tastatur eingibt, die mit der Steuerung gekoppelt ist, der passende Clip zugeführt wird und/oder das geeignete Verschließwerkzeug eingesetzt ist. Hierdurch wird die Prozesssicherheit nochmals erhöht.

Das erfindungsgemäße Verfahren zum Betreiben einer solchen Clipmaschine weist die Schritte Identifizieren einer Kennung eines zugeführten Clips, Ausgeben eines entsprechenden Clipinformationssignals, Identifizieren einer Kennung wenigstens eines wechselbaren ersten Verschließwerkzeugs, Ausgeben eines entsprechenden Verschließwerkzeuginformationssignals, Auswerten des Clipinformationssignals und des Verschließwerkzeuginformationssignals und Ausgeben eines Kompatibilitätssignals auf.

Weitere Merkmale und Vorteile der erfindungsgemäßen Clipmaschine und des erfindungsgemäßen Verfahrens finden sich in den Unteransprüchen. Diese werden unter Bezugnahme auf die beigefügten Figuren in der nachfolgenden Beschreibung verschiedener Ausführungsbeispiele erläutert. Es zeigen:
- Fig. 1: eine schematische Darstellung eines ersten Ausführungsbeispiels des erfindungsgemäßen Systems mit einer Clipmaschine und einem Clipvorrat,
- Fig. 2: eine schematische Darstellung eines zweiten Ausführungsbeispiels des erfindungsgemäßen Systems, und
- Fig. 3: ein Ablaufschema des erfindungsgemäßen Verfahrens zum Betreiben einer Clipmaschine.

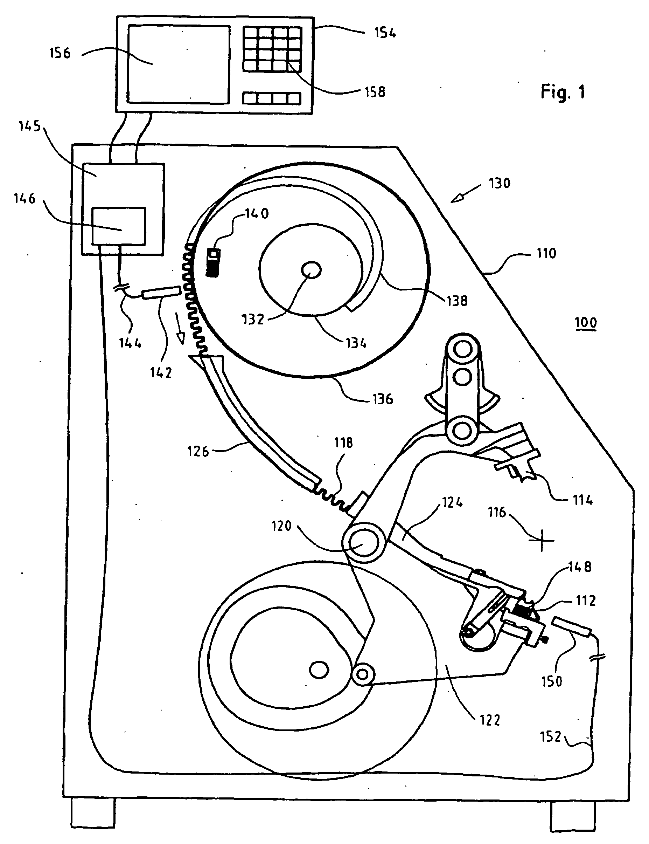

Das erfindungsgemäße System 100 ist in Fig. 1 auf seine erfindungswesentlichen Elemente reduziert dargestellt. Im Inneren ihres Gehäuses weist die erfindungsgemäße Clipmaschine 110 zwei relativ zueinander bewegliche Clipwerkzeuge 112 und 114 auf. Diese bewegen sich auf ein gemeinsames Zentrum 116 zu, welches typischerweise von der Schlauchachse einer zu verschließenden, befüllten Verpackungshülle definiert wird. Das um einen zuvor von nicht dargestellten Verdrängerelementen der Clipmaschine 110 durch Einschnüren gebildeten Schlauchzopf zu verschließende Verschlusselement (Clip) wird dem ersten Verschließwerkzeug 112 als wellenförmiger, quasi "endloser" Clipstrang 118 zugeführt. Das erste Verschließwerkzeug 112 ist zum Zweck der Zuführung des Clipstrangs daher an einem um eine Schwenkachse 120 angelegten Hebelarm 122 (unterer Verschließhebel) befestigt, der eine Führung 124 aufweist, die nahe der Schwenkachse 120 beginnt. Die Führung 124 mündet in dem ersten Verschließwerkzeug 112 welches in dem dargestellten Fall eine wechselbare Matrize ist.

Das korrespondiere zweite Verschließwerkzeug 112 ist ein Stempel. Die Verschließwerkzeuge erfüllen beim Aufeinanderzubewegen zwei Funktionen: zuerst wird der vorderste Clip von dem nachfolgenden Clipstrang 118 abgetrennt und danach um den Schlauchzopf herum verformt bis dieser fest verschlossen ist.

In dem Maschinengehäuse ist ein Clipzuführungssystem 130 angeordnet. Dieses umfasst eine auf einer Achse 132 angeordnete Aufnahme 134 für einen Clipvorrat auf einer Spule 136, die einen Vorratswickel 138 des in der Clipmaschine 100 verarbeiteten Clipstrangs trägt. Auf dem Weg von der Spule 136 zu der an dem unteren Verschließhebel 122 befindlichen Führung 124 wird der Clipstrang ferner durch eine zweite Führung 147 geleitet und somit auf einer über den im Wesentlichen gesamten Weg von dem Verbindungselement 140 zu dem Verschließwerkzeug 114 definierten Bahn geführt.

Das Ausführungsführungsbeispiel des erfindungsgemäßen Systems gemäß Fig. 1 weist ferner eine Kennung des Clipvorrats in Form eines an dem Spulenkörner 136 angebrachten Vorratsetiketts 140 auf. Das Vorratsetikett 140 enthält einerseits einen Abschnitt mit einem berührungslos maschinenlesbaren. optischen Strichcode (oder 2D-Code) und andererseits einen ebenfalls berührungslos maschinenlesbaren Transponderbereich (RFID-Abschnitt), in dem eine elektromagnetisch auslesbare RF- (Radiofrequenz-) Information gespeichert ist. In jedem der Abschnitte kann eine Information über den auf der Spule befindlichen Clip codiert sein. Zusätzlich kann noch ein bedruckbarer Bereich auf dem Etikett für vom Menschen lesbare Information vorgesehen sein, so dass die Clipgrößeninformation bei Beschädigung der automatisch auslesbaren Etikettabschnitte oder bei Versagen der Leseeinheit manuell eingegeben werden kann.

Das Etikett ist entsprechend mittels verschiedener Sensoreinrichtungen auslesbar. Die Clipmaschine weist zum Auslesen in der Nähe der Clipspule eine erste Sensoreinrichtung in Form einer Leseeinheit 142 auf, welche zum Auslesen des Strich- oder 2D-Codes und/ oder des RFID-Abschnitts des Etiketts 140 geeignet ist (die Darstellung in Fig. 1 ist zu illustrationszwecken stark vereinfacht und gibt nicht notwendiger Weise die tatsächliche Anordnung und Ausrichtung der Leseeinheit und des Vorratsetiketts wieder). Die optische Leseeinheit umfasst dazu in bekannter Weise eine Lichtquelle (Laser), eine Linsenoptik und einen Detektor zum Empfangen des reflektierten Lichts. Die Mittel zum Auslesen des RFID-Abschnitts auf dem Etikett 140 weisen in bekannter Weise eine Send- und Empfangsantenne und -elektronik auf, mit der der Transponder des Etiketts angeregt werden kann.

Zum Auslesen des Vorratsetiketts 140, welches Je nach Winkelstellung der Spule an unterschiedlicher Position angeordnet sein kann, kann es notwendig sein, dass die Spule zunächst in eine Lesestellung gedreht und/oder an der in der Regel ortsfesten Leseeinheit 142 vorbeigeführt werden muss. Dies kann mittels eines Steuerprogramms automatisch nach Einsetzen eines neuen Clipvorrats geschehen.

Die auf diese Weise ausgelesene Kennung wird von der Leseeinheit 142 in Form eines Clipinformationssignal übereine erste Signalleitung 144 einer Steuerung 145 und genauer einem Auswertemittel 146 zugeführt.

Auch das wechselbare Verschließwerkzeug in Form der Matrize 112 weist eine Kennung in Form eines Werkzeugetiketts 148 auf. im Bereich der Ausgangs- oder Öffnungsstellung des unteren Verschließhebels 122 bzw. des ersten Verschließwerkzeug 112 gemäß Fig. 1 ist eine zweiten Sensoreinrichtung in Form einer Leseeinheit 150 zum optischen Auslesen des Werkzeugetiketts angeordnet (auch an dieser Stelle ist die Darstellung in Fig. 1 zu illustratlohszwecken starkvereinfacht und gibt nicht notwendiger Weise die tatsächliche Anordnung und Ausrichtung der Leseeinheit und des Vorratsetiketts wieder). Das Verschließwerkzeug 112 befindet sich im Gegensatz zu dem Clipvorrat 136 immer in einen definierten Position relativ zu der Leseeinheit 150, bei Verschließwerkzeugwechsel nämlich typischerweise in der gezeigten Ausgangsstellung, wodurch das Auslesen des Verschließwerkzeugetiketts 148 vereinfacht. wird.

Auch das Werkzeugetikett kann beispielsweise einen Strich- oder 2D-Code-Abschnitt und/oder einen RFID-Abschnitt und/oder einen vom Menschen lesbaren Abschnitt einschließen. Entsprechendes gilt für die Leseeinheit 150.

Das von der Leseeinheit 150 auf diese Weise aus der Kennung des Verschließwerkzeugs 112 ermittelte Clipinformationssignal wird dem Auswertemittel 146 über eine zweite Signalleitung 152 zugeführt. Das Auswertemittel 146 wertet das Clipinformationssignal und das Verschließwerkzeuginformationssignal beispielsweise anhand eines tabellarischen Vergleichs aus. Ergibt der Vergleich, dass der verwendete Clip und das eingesetzte Verschließwerkzeug 112 kompatibel sind, so gibt das Auswertemittel 146 innerhalb der Steuerung 145 ein Kompatibilitätssignal zur weiteren Verwendung aus.

Die Clipmaschinensteuerung 145 ist mit einer Anzeigeeinrichtung in Formeines Terminals 154 verbunden. Das Terminal dient mittels eines Bildschirms 156 dazu, anhand des von der Steuerung 145 übermittelten Kompatibilitätssignals ein optisches Hinwelssignal auszugeben, wenn das erste Verschließwerkzeug 112 und der Clipvorrat nicht kompatibel sind. Es kann ferner einen (nicht dargestellten) Lautsprecher umfassen, welcher gleichzeitig oder alternativ ein akustisches Hinweissignal erzeugt.

Das Terminal 154 weist ferner ein Eingabetastenfeld 158 auf, über das - beispielsweise menügeführt - eine Produktinformation zu dem herzustellenden Wurstprodukt oder dgl. eingegeben werden kann, die der Steuerung 145 über eine Schnittstelle zugeführt wird. Die Steuerung 145 bzw. eine darin enthaltene Recheneinheit verifiziert daraufhin eine Übereinstimmung zwischen dem Clipinformationssignal bzw. dem Verschließwerkzeuginformationssignal und der Produktinformation. Liegt eine Übereinstimmung vor, gibt die Steuerung 145 ein Plausibilitätssignal aus. Dies kann wiederum der Anzeige eingegeben werden, die dies mit einer Bestätigungsmeldung oder dem Aufruf eines nächsten Eingabemenüpunktes quittiert. Ferner kann es als Startsignal für den oben beschriebenen Vergleich zwischen der Clipinformation und der Verschließwerkzeuginformation oder, falls dieser Vergleich schon initiiert wurde, als Startsignal für den Clipvorgang verwendet werden.

Das Terminal 154 und/oder die Steuerung 145 können weitere externe Schnittstellen zur Ansteuerung eines derClipmaschine 110 vorgeschalteten Füllers oder einer der Clipmaschine 110 nachgeschalteten Produktabnahmeeinrichtung aufweisen.

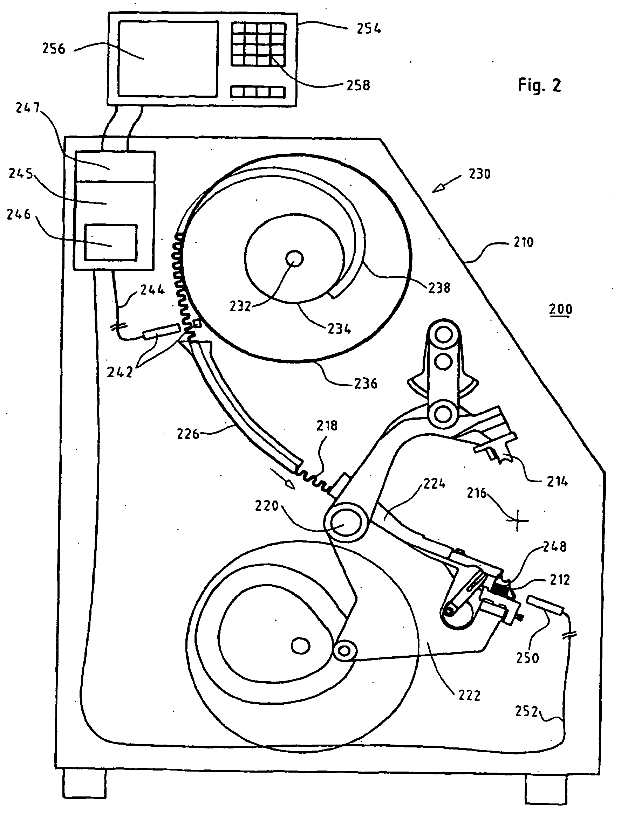

In Fig. 2 ist ein weiteres Ausführungsbeispiel des erfindungsgemäßen Systems 200 mit einer Clipmaschine 210 dargestellt, welche bis auf einige erfindungswesentliche Merkmale mit der Clipmaschine aus Fig. 1 übereinstimmt.

Abweichend von dem Ausführungsbeispiel gemäß Fig. 1 weist in Fig. 2 die Sensoreinheit ein Abtastsystem in Form einer Lichtschranke 242 entlang der Zuführstrecke des Clipstranges 218 auf (auch Fig. 2 stellt die Leseeinheit und das Vorratsetiketts zu Illustrationszwecken nur stark schematisiert dar und gibt nicht notwendigerweise deren tatsächliche Anordnung und Ausrichtung wieder). Der Clipstrang 218 durchläuft die Lichtschranke 242 und löst dabei beispielsweise ein periodisches An-Aus-Signal aus, wenn die Schenkel der Clips die Lichtschranke passieren. Das An-Aus-Signal wird über eine Signalleitung 252 einer der Sensoreinheit zugeordneten Vergleichseinrichtung 247 zugeführt. Bei bekannter oder überwachter Clipvorschubgeschwindigkeit. kann aus dem An-Aus-Signal mittels einer zusätzlichen Zeit- oder Taktinformation die Teilung des Clipstranges ermittelt und somit eine geometrische Information der vom Clipvorrat zugeführten Clips 218 gewonnen werden. Die Vergleichseinrichtung 247 weist zu diesem Zweck ferner einen Eingang für ein Taktsignal und einen Eingang für ein Vorschubgeschwindigkeitssignal auf (beides nicht dargestellt). Durch Vergleich derso ermittelten Clipteilung mit einer Referenz ermittelt die Vergleichseinrichtung 247 die Clipinformation und gibt diese als Clipinformationssignal an das Auswertemittel 246 weiter, das - in gleicher Weise wie oben beschrieben - aus dem eingegangenen Clipinformationssignal und dem Verschließwerkzeuginformationssignal die Kompatibilität der zugeführten Clips 218 und des eingesetzten ersten Verschließwerkzeugs 212 ermittelt.

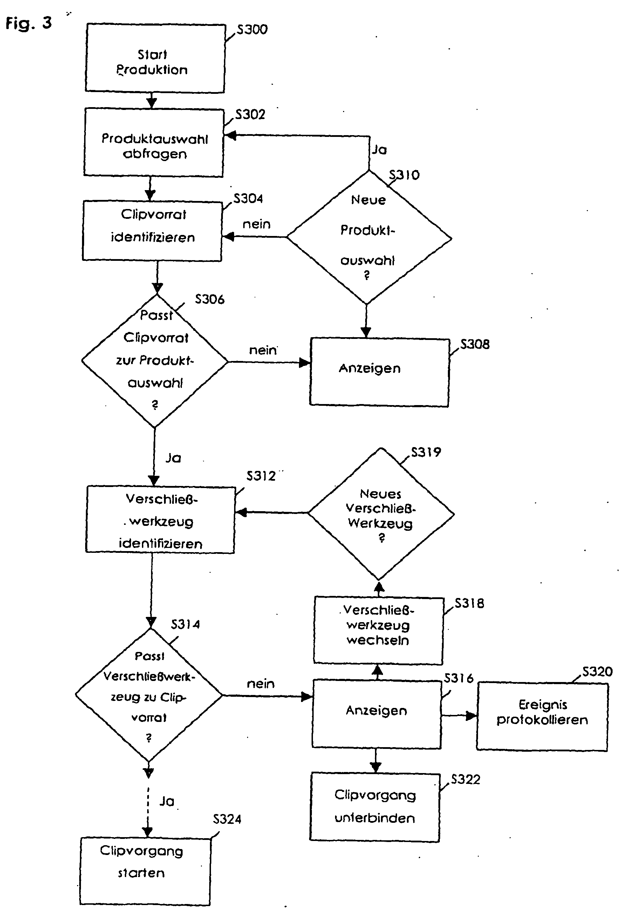

Anhand Fig.3 wird nun ein Ausführungsbeispiel des erfindungsgemäßen Verfahrens zum Betreiben einer Clipmaschine erläutert.

Mit jedem Produktionsstart S 300 beginnt die Initialisierung der Clipmaschine welche die nachfolgend beschrieben Schritte aber auch beispielsweise ein Einrichtverfahren umfassen kann, bei der die Ruhelage der Verschließwerkzeuge bestimmt und ggf. eingestellt werden kann. In einem Schritt S 302 wird die gewünschte Produktauswahl abgefragt. Dies kann beispielsweise menügeführt über das zuvor beschriebene Terminal 154 geschehen oder über einen externen Bus, über den die Clipmaschine 110, 112 bzw. deren Steuerung 145, 245 beispielsweise mit einer externen Steuer-/Recheneinheit oder Maschine verbunden ist. Wird die Produktauswahl über das Terminal 154 abgefragt, so kann der Bediener seine Auswahl über das Tastenfeld 258 oder einen berührungsempfindlichen Bildschirm eingeben und quittieren.

Als nächste Information wird in einem Schritt S 304 der in die Clipmaschine eingelegte Clipvorrat identifiziert. Ist dies geschehen, so wird im Schritt S 306 eine Plausibilitätskontrolle durchgeführt, bei der geprüft wird, ob der identifizierte Clipvorrat zu der abgefragten Produktauswahl passt. Ist dies nicht der Fall, so wird das Kompatibilitätssignal beispielsweise an dem Terminal 154 in Schritt S 308 zur Anzeige gebracht. Gleichzeitig wird in Schritt S 310 eine Rückfrage ausgelöst, die den Bediener der Maschine vor die Wahl stellt, eine neue Produktauswahl zu treffen oder einen neuen Clipvorrat einzusetzen. Entscheidet er sich, für den neuen Clipvorrat, so führt die Schleife auf Schritt S 304 zurück und der Clipvorratwird erneut identifiziert, nachdem der Bediener den Wechsel des Clipvorrats quittiert bzw. die neue Produktauswahl verneint hat. War hingegen die ursprüngliche Produktauswahl falsch und entscheidet sich der Bediener daher eine neue Produktauswahl zu treffen, so schließt sich an eine entsprechende Quittierung erneut die Produktauswahlabfrage S 302 an.

Ergibt schließlich die Plausibilitätskontrolle in Schritt S 306, dass der identifizierte Clipvorrat zu der getroffenen Produktauswahl passt, wird in einem nächsten Schritt S 312 das eingesetzte Verschließwerkzeug mittels der oben beschriebenen zweiten Sensoreinrichtung identifiziert. Das Resultat, nämlich das Verschließwerkzeuginformationssignal, wird an die Steuerung übergeben, welche in Schritt S 314 eine Kompatibilitätsprüfung vornimmt, d.h. beispielsweise durch einen tabellarischen Vergleich prüft, ob das identifizierte Verschließwerkzeug zu dem identifizierten Clipvorrat passt. Ist dies nicht der Fall, so wird das Resultat in Schritt S 316 wiederum zur Anzeige gebracht. Hieran kann sich in Schritt S 318 ein Verschließwerkzeugwechsel anschließen und nach dem Verschließwerkzeugwechsel in Schritt S 319 erneut eine Abfrage über das Terminal erfolgen auf die der Bediener den erfolgten Verschließwerkzeugwechsel quittiert. Darauf wird das Verschließwerkzeug in Schritt S 312 erneut identifiziert.

De Weiteren wird das Inkompatibilitätsereignis in Schritt S 320 protokolliert. Auf diese Weise protokollierte Ereignisse können beispielsweise bei einem Service ausgelesen werden und somit Rückschlüsse auf eine mögliche Fehlmanipulationen oder andere Fehlerquellen gezogen werden.

In einem weiteren Schritt S 322 wird bei inkompatibilität der Clipvorgang, d. h. die Verarbeitung der zugeführten Clips, durch Ausgabe eines entsprechenden Sperrsignals solange durch die Steuerung unterbunden, bis der Wechsel des Verschließwerkzeugs in Schritt 318 vorgenommen und in Schritt S 319 quittiert wurde, eine neue Verschließwerkzeugidentifikation S 312 stattgefunden und die Verifikation in S 314 ergeben hat, dass nun die Kompatibilität gegeben ist.

Zwischen der Feststellung der Kompatibilität in Schritt S 314 und dem endgültigen Start des Clipvorgangs in Schritt S 324 können weitere Abfrageschritte erfolgen. Zum Beispiel kann die ist-Ruhelage eines oder beiderVerschließwerkzeuge 112, 114 bzw. 212, 214 und somit der Verschlussabstand mittels einer dafür vorgesehenen Positionsbestimmungseinrichtung ermittelt werden. Diese ist-Ruhelage wird dann beispielsweise entweder direkt mit dem Clipinformationssignal und/oder dem Verschließwerkzeuginformationssignal oder mit einer aus einem oder beiden Signalen bestimmten Soll-Ruhelage verglichen. Die Soll-Ruhelage kann beispielsweise wiederum in der Clipmaschinensteuerung nach Identifikation des Clipvorrats und/oder Identifikation des Verschließwerkzeugs erfolgen und zwischengespeichert werden.

Sowohl die ist-Ruhelage als auch die Soll-Ruhelage wird danach beispielsweise auf dem Terminal 154 zur Anzeige gebracht, um als Einrichthilfe dem Bediener zu signalisieren, in welcher Richtung er über das Einstellmittel die Ruhelage des Verschließwerkzeugs zu verstellen hat, damit die Soll-Ruhelage erreicht wird. Weist das Einstellmittel der Clipmaschine einen Verstellantrieb auf, so dass die Ruhelage automatisch verstellt werden kann, dient das Ergebnis des Vergleichs der ist-Ruhelage mit der Soll-Ruhelage als Steuersignal für den Verstellantrieb.

Weitere Initialisierungsschritte sind noch denkbar, bevor in S 324 der Clipvorgang gestartet wird.

Neben den vorstehend beschriebenen ersten und zweiten Sensoreinrichtungen zur Identifikation der Kennung des Clipvorrats und des Verschließwerkzeugs sind auch weitere Leseeinheiten bzw. Abtastsysteme denkbar, die wirkungsgleich geometrische oder anderweitig codierte Information jedoch mit anderen physikalischen Mitteln ermitteln. Beispielsweise können sowohl zur Identifikation der Kennung des Clipvorrats als auch des Verschließwerkzeugs CCD-Kameras, Taster, Abstandssensoren, Lichtschranken, akustische Signalwandler, die ein Schallsignal erzeugen und ein Echosignal erfassen, welches für die geometrische Struktur signifikant ist, oder dgl. eingesetzt werden.

Das wechselbare Verschließwerkzeug ist in den gezeigten Ausführungsbeispielen die Matrize. Jedoch Ist die Erfindung nicht auf diese Ausführungsform des Systems bzw. der Clipmaschine beschränkt. Gleichwohl kann im Sinne der Erfindung gleichzeitig oder anstelle der Matrize (auch) das zweite Verschließwerkzeug, nämlich der Stempel, auswechselbar ausgestaltet sein, so dass (auch) dieser an die Größe des zu verformenden Clips angepasst werden kann. Die erfindungsgemäße sensorische Erfassung des verwendeten Stempels lässt sich entsprechend realisieren, wenn dieser eine Kennung aufweist und wenn diesem eine Sensoreinrichtung zugeordnet ist, welche in gleicher Weise eingerichtet ist, die Kennung zu identifizieren und ein Verschließwerkzeugsignal an die Steuerung der Clipmaschine auszugeben, welche dieses in entsprechender Weise auswertet und das Kompatibilitätssignal in Abhängigkeit (auch) von dem dritten Verschließwerkzeuginformationssignal ausgibt.

Der Clipvorrat muss nicht von einer Spule mit einem Wickel der oben beschriebenen Art gebildet werden. Es versteht sich von selbst, dass die Erfindung bei jeder Art der Zuführung eines Clipvorrats Anwendung finden kann.

Das erfindungsgemäße Verfahren zum Betreiben einer Clipmaschine ist weder hinsichtlich der Reihenfolge noch der Anzahl und Art der Verfahrensschritte auf das im Zusammenhang mit Fig. 3 geschilderte Ausführungsbeispiel festgelegt.

## Patentansprüche

1. System (100, 200) aufweisend:
eine Clipmaschine (110, 210) mit wenigstens einem wechselbaren ersten Verschließwerkzeug (112, 212), welches zum Verschließen von Clips um eine schlauch- oder beutelförmige Verpackungshülle relativ zu einem zweiten Verschließwerkzeug (114, 214) bewegbar ist, und einen Clipvorrat,
**dadurch gekennzeichnet, dass** das erste Verschließwerkzeug (112, 212) und der Clipvorrat jeweils eine Kennung aufweisen und dass die Clipmaschine eine erste Sensoreinrichtung, welche eingerichtet ist, die Kennung des Clipvorrats zu identifizieren und ein entsprechendes Clipinformationssignal auszugeben, eine zweite Sensoreinrichtung, welche eingerichtet ist, die Kennung des ersten Verschließwerkzeug zu identifizieren und ein entsprechendes Verschließwerkzeuginformationssignal auszugeben, und eine Steuerung (145, 245) mit einem mit der ersten und der zweiten Sensoreinrichtung gekoppelten Signaleingang und einem Auswertemittel (146, 246) aufweist, welches eingerichtet ist, das Clipinformationssignal und das Verschließwerkzeuginformationssignal auszuwerten und ein Kompatibilitätssignal auszugeben, das angibt, ob das identifizierte Verschließwerkzeug zu dem identifizierten Clipvorrat passt.

2. System (100, 200) nach Anspruch 1,
**dadurch gekennzeichnet, dass** der Clipvorrat einen Spulenkörper (136) mit einem darauf aufgewickelten Clipstrang (138, 238) und ein Vorratsetikett (140) mit der Kennung des Clipvorrats aufweist und dass die erste Sensoreinrichtung eine Leseeinheit (142) für das Vorratsetikett aufweist.

3. System (100, 200) nach Anspruch 1,
**dadurch gekennzeichnet, dass** die erste Sensoreinrichtung ein Abtastsystem (242) aufweist, das eingerichtet ist, die Kennung des Clipvorrats in Form einer geometrischen Information der vom Clipvorrat zugeführten Clips (218) zu erfassen und eine entsprechende Abtastinformation auszugeben, und dass eine mit dem Abtastsystem (242) gekoppelte Vergleichseinrichtung (247) vorgesehen ist, die eingerichtet ist, die Abtastinformation zu empfangen, mit einer Referenz zu vergleichen und das Ergebnis des Vergleichs als Clipinformationssignal an die Auswertemittel (246) auszugeben.

4. System (100, 200) nach einem der vorstehenden Ansprüche,
**dadurch gekennzeichnet, dass** das erste Verschließwerkzeug (112, 212) ein Werkzeugetikett (148, 248) mit der Kennung des ersten Verschließwerkzeugs aufweist und dass die zweite Sensoreinrichtung eine Leseeinheit (150, 250) für das Werkzeugetikett (148, 248) aufweist.

5. System (100, 200) nach einem der Ansprüche 1 bis 4,
**dadurch gekennzeichnet, dass** das erste Verschließwerkzeug (112, 212) eine Matrize mit einer geometrischen Kennung ist, dass die Clipmaschine eine Matrizenaufnahme aufweist, die als zweiten Sensoreinrichtung Mittel zum Abtasten der geometrischen Kennung und zum Ausgeben einer entsprechenden Abtastinformation umfasst.

6. Clipmaschine (110, 210) mit den Merkmalen nach einem der Ansprüche 1 bis 5.

7. Verfahren zum Betreiben eines Systems nach einem der Ansprüche 1 bis 5 zum Verschließen von Clips um eine schlauch- oder beutelförmige Verpackungshülle mit den Schritten:
Identifizieren (S 304) einer Kennung eines Clipvorrats, Ausgeben eines entsprechenden Clipinformationssignals,
Identifizieren (S 312) einer Kennung wenigstens eines wechselbaren ersten Verschließwerkzeugs,
Ausgeben eines entsprechenden Verschließwerkzeuginformationssionals,
Auswerten (S 314) des Clipinformationssignals und des Verschließwerkzeuginformationssignals und
Ausgeben eines Kompatibifitätssignals, das angibt, ob das identifizierte Verschließwerkzeug zu dem identifizierten Clipvorrat passt.

8. Verfahren nach Anspruch 7,
**dadurch gekennzeichnet, dass** das Identifizieren (S 304) der Kennung des Clipvorrats ein Auslesen eines dem Clipvorrat zugeordneten Vorratsetiketts (140) umfasst.

9. Verfahren nach Anspruch 7,
**dadurch gekennzeichnet, dass** das Identifizieren (S 304) der Kennung des Clipvorrats ein Abtasten einer geometrischen Information von dem Clipvorrat zugeführter Clips und das Vergleichen der so gewonnenen Abtastinformation mit einer Referenz umfasst und dass das Ergebnis des Vergleichs als Clipinformationssignal ausgegeben wird.

## Claims

1. A system (100, 200) comprising:
a clip machine (110, 210) with at least one interchangeable first closing tool (112, 212) which can be moved to close clips about a tube-type or pouch-type casing relative to a second closing tool (114, 214), and a clip supply,
**characterised in that** the first closing tool (112, 212) and the clip supply each have an identification code and that the clip machine includes a first sensor unit configured to identify the code of the clip supply and to output a corresponding clip information signal, a second sensor unit configured to identify the code of the first closing tool and to output a corresponding closing tool information signal, and a controller (145, 245) comprising a signal input which is coupled to the first and the second sensor unit and an evaluation means (146, 246) which is configured to evaluate the clip information signal and the closing tool information signal and to output a compatibility signal indicating whether the identified closing tool matches the identified clip supply.

2. The system (100, 200) of claim 1,
**characterised in that** the clip supply has a reel member (136) with a line of clips (138, 238) wound thereon and a stock label (140) bearing the code of the clip supply, and **in that** the first sensor unit has a reader unit (142) for reading the stock label.

3. The system (100, 200) of claim 1,
**characterised in that** the first sensor unit includes a scanning system (242) adapted to detect the code of the clip supply in the form of geometrical information about the clips (218) supplied from the clip supply and to output corresponding scan information, and **in that** a comparator unit (247) coupled to said scanning system (242) is provided, said unit being adapted to receive the scan information, to compare it with reference information and to output the result of the comparison as a clip information signal to the evaluation means (246).

4. The system (100, 200) of any of the preceding claims,
**characterised in that** the first closing tool (112, 212) includes a tool label (148, 248) bearing the identification code of the first closing tool and **in that** the second sensor unit includes a reader unit (150, 250) for reading said tool label (148, 248).

5. The system (100, 200) of any of claims 1 to 4,
**characterised in that** the first closing tool (112, 212) is a die-plate with a geometrical identification code, and **in that** the clip machine has a die-plate receiver which includes means, as a second sensor device, for scanning the geometrical code and for outputting corresponding scan information.

6. A clip machine (110, 210) with the features of any of claims 1 to 5.

7. A method for operating a clip machine according to any of claims 1 to 5 for closing clips about a tube-type or pouch-type casing, comprising the steps:
identifying (S 304) an identification code of a clip supply, outputting a corresponding clip information signal,
identifying (S 312) an identification code of at least one interchangeable first closing tool,
outputting a corresponding closing tool information signal,
evaluating (S 314) the clip information signal and the closing tool information signal and
outputting a compatibility signal indicating whether the identified closing tool matches the identified clip supply.

8. The method of claim 7,
**characterised in that** identifying (S 304) the code of the clip supply includes reading a stock label (140) associated with the clip supply.

9. The method of claim 7,
**characterised in that** identifying (S 304) the code of the clip supply includes scanning geometrical information from clips supplied to the clip supply and comparing the scanning information thus obtained with reference information, and **in that** the result of the comparison is outputted as a clip information signal.

## Revendications

1. Système (100, 200) comprenant:
une machine d'agrafage (110, 210) ayant au moins un premier outil de fermeture (112, 212) remplaçable, mobile par rapport à un deuxième outil de fermeture (114, 214) pour fermer des agrafes autour d'une enveloppe d'emballage en forme de gaine ou de sachet et une réserve d'agrafes,
**caractérisé en ce que** le premier outil de fermeture (112, 212) et la réserve d'agrafes ont respectivement un élément d'identification et **en ce que** la machine d'agrafage a un premier dispositif de détection servant à identifier l'élément d'identification de la réserve d'agrafes et à émettre un signal d'information correspondant concernant les agrafes, un deuxième dispositif de détection servant à identifier l'élément d'identification du premier outil de fermeture et à émettre un signal d'information correspondant concernant l'outil de fermeture, et une unité de commande (145, 245) comprenant une entrée de signal couplée au premier et au deuxième dispositif de détection et un moyen d'interprétation (146, 246) servant à interpréter le signal d'information concernant les agrafes et le signal d'information concernant l'outil de fermeture et à émettre un signal de compatibilité, qui indique si l'outil de fermeture identifié s'adapte au réservoir d'agrafes identifié.

2. Système (100, 200) selon la revendication 1,
**caractérisé en ce que** la réserve d'agrafes a un corps de bobine (136) ayant une file d'agrafes (138, 238) qui y est enroulée et une étiquette de réserve (140) comprenant l'élément d'identification de la réserve d'agrafes et **en ce que** le premier dispositif de détection a une unité de lecture (142) de l'étiquette de réserve.

3. Système (100, 200) selon la revendication 1,
**caractérisé en ce que** le premier dispositif de détection a un système de balayage (242) servant à détecter l'élément d'identification de la réserve d'agrafes, se présentant sous la forme d'une information géométrique des agrafes (218) délivrées de la réserve d'agrafes, et à fournir une information de balayage correspondante, et **en ce qu'**il est prévu un dispositif de comparaison (247) couplé au système de balayage (242) et servant à recevoir l'information de balayage pour la comparer à une référence et à fournir aux moyens d'interprétation (246) le résultat de la comparaison sous la forme d'un signal d'information concernant les agrafes.

4. Système (100, 200) selon l'une des revendications précédentes,
**caractérisé en ce que** le premier outil de fermeture (112, 212) a une étiquette d'outil (148, 248) ayant l'élément d'identification du premier outil de fermeture et **en ce que** le deuxième dispositif de détection a une unité de lecture (150, 250) de l'étiquette d'outil (148, 248).

5. Système (100, 200) selon l'une des revendications 1 à 4,
**caractérisé en ce que** le premier outil de fermeture (112, 212) est une matrice ayant un élément d'identification géométrique, **en ce que** la machine d'agrafage a un logement de matrice qui comprend, en tant que deuxième dispositif de détection, des moyens pour balayer l'élément d'identification géométrique et pour émettre une information de balayage correspondante.

6. Machine d'agrafage (110, 210) ayant les caractéristiques de l'une des revendications 1 à 5.

7. Procédé pour faire fonctionner un système suivant l'une des revendications 1 à 5, pour fermer des agrafes autour d'une enveloppe d'emballage en forme de gaine ou de sachet, comprenant les étapes:
identification (S 304) d'un élément d'identification d'une réserve d'agrafes,
émission d'un signal d'information correspondant concernant les agrafes,
identification (S 312) d'un élément d'identification d'au moins un premier outil de fermeture remplaçable,
émission d'un signal d'information correspondant concernant l'outil de fermeture,
interprétation (S 314) du signal d'information concernant les agrafes et du signal d'information concernant l'outil de fermeture et
émission d'un signal de compatibilité, qui indique si l'outil de fermeture identifié s'adapte au réservoir d'agrafes identifié.

8. Procédé selon la revendication 7,
**caractérisé en ce que** l'identification (S 304) de l'élément d'identification de la réserve d'agrafes comprend la lecture d'une étiquette de réserve (140) associée à la réserve d'agrafes.

9. Procédé selon la revendication 7,
**caractérisé en ce que** l'identification (S 304) de l'élément d'identification de la réserve d'agrafes comprend le balayage d'une information géométrique des agrafes délivrées de la réserve d'agrafes et la comparaison de l'information de balayage ainsi obtenue avec une référence et **en ce que** le résultat de la comparaison est émis sous la forme d'un signal d'information concernant les agrafes.
